# EUROPEAN PATENT APPLICATION

(11) **EP 4 692 966 A1**
(43) Date of publication of application: **11.02.2026**
(21) Application number: 25176019.5
(22) Date of filing: 13.05.2025
(51) Int. Cl.: G05B 19/418

(54) **MACHINING PERFORMANCE MANAGEMENT SYSTEM FOR NC MACHINE TOOL, SERVER DEVICE, AND MACHINING STATUS MONITORING PROGRAM**

(30) Priority: 08.08.2024 JP 2024131799
(71) Applicant: NIKKEN KOSAKUSHO WORKS, LTD., Osaka 574-0023 (JP)
(72) Inventor: MIKADO, Susumu, Osaka, 574-0023 (JP)
(74) Representative: Müller Hoffmann & Partner

(57) **Abstract**

An NC device (2) includes a character information storage unit (24) configured to store at least one piece of machining management data entered on a character information input screen. The machining management data includes an order number represented by a character string corresponding to a desired machining order, and a control flag that is set and updated based on the machining status of a workpiece according to the machining order. A server device (4) includes: a scanning unit (51) configured to periodically scan the machining management data retained in the character information storage unit, and to determine, based on the value of the control flag, the start and end of machining of the workpiece; and an analysis unit (52) configured to analyze, in response to determination of the end of the machining by the scanning unit (51), machining performance according to the machining order by referring to operation history data associated with the order number.

## Description

### BACKGROUND

The present invention relates to machining performance management system for numerical control (NC) machine tool, server device, and machining status monitoring program.

Japanese Unexamined Patent Application Publication No. 2003-295920 discloses a technique of managing a plurality of machine tools. In this technique, NC devices of a plurality of machine tools to be managed are connected to one server device (hereinafter simply referred to as "server"). The server centrally manages management data and history data on all of the connected NC devices. The server publishes, on a network including the Internet, a display or update screen of the data on each machine tool managed by the server, so that client computers connected to the network can access the published screen and manage any desired machining tool connected to the server.

### SUMMARY

In the system of Japanese Unexamined Patent Application Publication No. 2003-295920, the server manages the machining schedule of the NC devices, and each NC machine tool machines a workpiece under predetermined machining conditions (machine name, time, number of workpieces planned to be machined, etc.). Therefore, the server can easily manage the progress of workpiece machining.

It is also common to operate NC machine tools as determined on site without managing the machining schedule by a server. In this case, each NC device numerically controls its machine tool (body) according to an NC program selected by a worker according to a desired work order. Each NC machine tool thus machines (turns, mills, etc.) a workpiece according to a desired work order at a desired timing. Usually, the server constantly receives, from each NC device, "operation history data" indicating the execution status of the NC program. However, it is not possible to grasp the machining performance from the operation history data alone. Accordingly, a process management terminal is conventionally required in addition to the server.

The present invention was made to solve the above problem, and one object of the present invention is to provide a machining performance management system that can manage machining performance of each NC machine tool without using a process management terminal and that can thus easily perform process management of each product.

Another object of the present invention is to provide a server device that is used in the machining performance management system and a machining status monitoring program that is executed by the server device.

A machining performance management system for an NC machine tool according to an aspect of the present invention is a machining performance management system configured to manage machining performance of each NC machine tool. The machining performance management system includes: NC devices each attached to a corresponding one of the NC machine tools; and a server device connected to the NC devices via a network and configured to receive operation history data from the NC device. The operation history data indicates an execution status of an NC program. The NC device includes: a display unit configured to display a character information input screen that allows character information to be entered; and a character information storage unit configured to store at least one piece of machining management data entered on the character information input screen. The "machining management data" includes an order number and a control flag. The order number is represented by a character string corresponding to a desired machining order. The control flag is set and updated based on a machining status of a workpiece according to the machining order. The server device includes: a scanning unit configured to periodically scan the machining management data that is character information retained in the character information storage unit of the NC device, and to determine, based on the value of the control flag, start and end of machining of the workpiece according to the machining order; and an analysis unit configured to analyze, in response to determination of the end of the machining by the scanning unit, machining performance according to the machining order by referring to the operation history data associated with the order number (that is, analyze the machining performance based on both the operation history data that is used conventionaly and the machining management data).

Preferably, variables to which the control flag is allowed to take include a first value indicating the start of machining and a second value indicating the end of machining, and the scanning unit is configured to record a time when the control flag is set to the first value as a machining start time, and to record a time when the control flag is updated from the first value to the second value as a machining end time.

More preferably, the analysis unit is configured to calculate, as the number of workpieces actually machined according to the machining order, the number of times a main machining program was executed during a period from the machining start time to the machining end time recorded by the scanning unit.

The server device desirably further includes a machining performance storage unit configured to store machining performance data. The machining performance data includes an equipment name that identifies each of the NC machine tools, the order number, the machining start time, the machining end time, and the number of workpieces actually machined.

In one embodiment, the machining management data includes, in addition to the order number and the control flag, either or both of a code number of a machined product identified by the order number and the number of workpieces planned to be machined.

When the NC device is, for example, an NC device made by FANUC CORPORATION, the character information input screen may be a "maintenance information screen" describing maintenance information of the NC machine tool.

A server device according to an aspect of the present invention is a server device connected via a network to an NC device attached to an NC machine tool. The NC device includes a character information storage unit configured to store at least one piece of machining management data entered on a character information input screen. The machining management data includes an order number and a control flag. The order number is represented by a character string corresponding to a desired machining order. The control flag is set and updated based on a machining status of a workpiece according to the machining order. The server device includes: a scanning unit configured to periodically scan the machining management data that is character information retained in the character information storage unit of the NC device, and to determine, based on the value of the control flag, start and end of machining of the workpiece according to the machining order; and an analysis unit configured to analyze, in response to determination of the end of the machining by the scanning unit, machining performance according to the machining order by referring to operation history data associated with the order number as received from the NC device.

A machining status monitoring program according to an aspect of the present invention is a program configured to be executed by a server device connected via a network to an NC device attached to an NC machine tool. The machining status monitoring program includes periodically scanning at least one piece of machining management data retained as character information in the NC device. The machining management data includes an order number and a control flag. The order number is represented by a character string corresponding to a desired machining order. The control flag is set and updated based on a machining status of a workpiece according to the machining order. The machining status monitoring program further includes: when the control flag has a first value, determining start of machining of the workpiece according to the machining order; when the control flag has a second value, determining end of the machining of the workpiece according to the machining order; and in response to determination of the end of the machining, analyzing machining performance according to the machining order by referring to the operation history data associated with the order number as received from the NC device.

According to the present invention, it is possible to manage machining performance of each NC machine tool by a server without using a process management terminal. As a result, it is possible to easily perform process control of each product.

### BRIEF DESCRIPTION OF THE DRAWINGS

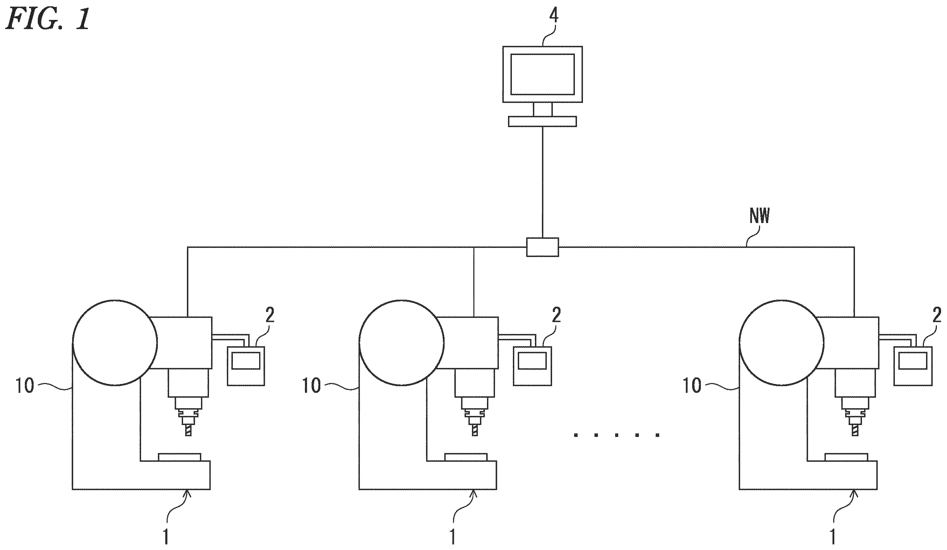

FIG. 1 schematically shows the overall configuration of a machining performance management system according to an embodiment of the present invention.
FIG. 2 schematically shows an overview of the machining performance management system according to the embodiment of the present invention.
FIG. 3 is a block diagram showing functional configurations of an NC device and a server in the embodiment of the present invention.
FIG. 4 is a table showing an example of the content of machining management data in the embodiment of the present invention.
FIG. 5 shows specific examples of a character information input screen.
FIG. 6 is a table showing an example of the content of machining performance data stored in a machining performance storage unit in the embodiment of the present invention.
FIG. 7 is a timing chart showing the overall process flow of the machining performance management system according to the embodiment of the present invention.
FIG. 8 is a flowchart showing a machining status monitoring process that is performed by the server in the embodiment of the present invention.
FIG. 9A is a flowchart showing a process (first process) that is performed by the server when machining is started in the embodiment of the present invention.
FIG. 9B is a flowchart showing a process (second process) that is performed by the server when the machining is finished in the embodiment of the present invention.
FIG. 10 conceptually shows a known machining performance management system.

### DETAILED DESCRIPTION

An embodiment of the present invention will be described in detail with reference to the drawings. The same or corresponding portions are denoted by the same signs throughout the drawings, and description thereof will not be repeated.

First, the basic configuration of an NC machine tool 1 in the embodiment of the present invention will be briefly described. The NC machine tool 1 includes a machine tool body 10 and an NC device 2. The machine tool body 10 includes a drive system such as a feed rod that is driven by a servo motor. The NC device 2 numerically controls the machine tool body 10 during machining of a workpiece. The NC device 2 is connected to a server 4 via a network NW. Various kinds of data and programs are transferred between the NC device 2 and the server 4. Usually, a plurality of NC machine tools 1 (NC devices 2) is connected wired or wirelessly to one server 4. The NC machine tools 1 may include an NC lathe machine, a machining center, and an NC polishing machine (include at least a machining center). A display device (not shown) installed on site (factory) is connected to the network NW, and the operation status of the NC machine tools 1 etc. can be checked on the display device.

The NC device 2 controls the machine tool body 10 according to an NC program and numerical control parameters downloaded from the server 4. The NC program typically includes a main program (hereinafter referred to as "main machining program") and a subprogram called from the main program.

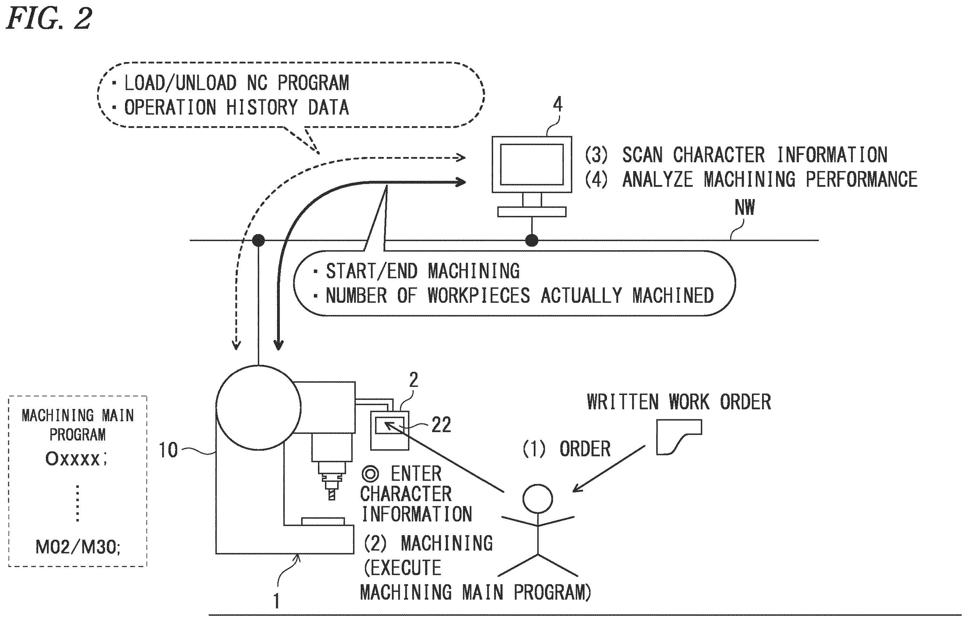

FIG. 2 shows an overview of a machining performance management system including the NC device 2 and the server 4. As shown in FIG. 2, the NC device 2 includes an operation panel 22 equipped with a display unit. A display screen on the operation panel 22 displays information on a running program, workpiece position information, maintenance information, etc. The operation panel 22 allows to select a main machining program to be used to machine a workpiece, and to enter macro variables and program comments to be used to control the machine tool body 10.

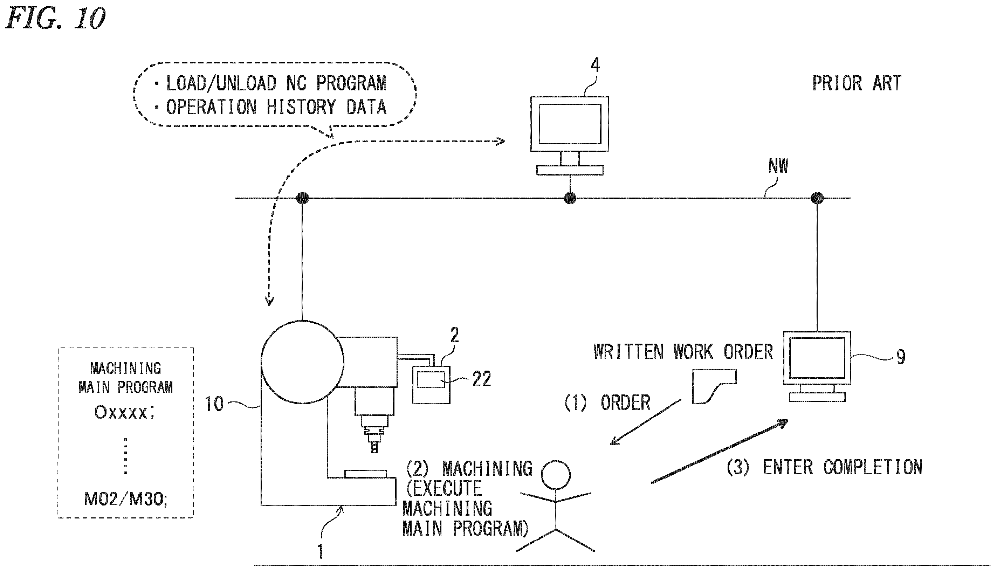

In the machining performance management system of the present embodiment, the server 4 does not control the machining schedule, and each NC machine tool 1 machines a workpiece according to a desired work order given by a worker on site. FIG. 10 shows a known machining performance management system that is used in the case where the NC machine tool 1 is operated by the initiative of a worker on site.

As shown in FIG. 10, in the known machining performance management system, a worker on site receives a work order via a written work order (or a process management terminal 9 on site), selects a main machining program according to the work order via the operation panel 22, and starts operating the NC machine tool 1. The NC device 2 performs a workpiece machining cycle according to the work order by executing the selected main machining program (and a subprogram called from the main machining program).

The NC device 2 has functions to load and unload an NC program such as a main machining program stored in the server 4 and to automatically upload (transmit) "operation history data" indicating the execution status of the NC program to the server 4. However, it is not possible to grasp the machining performance (actual results) of each NC machine tool 1 from the operation history data alone. Therefore, conventionally, every time each NC machine tool 1 completes machining of workpieces (finishes machining according to a desired work order), information indicating completion of the machining of workpieces by that NC machine tool 1 is entered to the process management terminal 9 in order to make it possible to manage the machining process of each product.

The machining performance can be identified by the content of the work order, the date and time when the work order was executed (machining start time and machining end time), and the number of workpieces actually machined. The work order is identified by an "order number" that uniquely identifies a machined product (a product type) and a machining type. The machined product can be identified by a "code number."

If the worker can operate the operation panel 22 to use macro variables and program comments as control data of the NC device 2, data necessary to manage the machining performance, including an order number, can be automatically transmitted to the server 4. However, this method cannot be adopted because an order number is usually represented by a character string (containing characters). Specifically, only numerical values can be entered as macro variables, and character strings can be entered as program comments, but the program comments need to be changed every time the order number (machined product) changes, which is not practical.

As shown in FIG. 2, a main feature of the machining performance management system according to the present embodiment is that the display unit of the operation panel 22 is able to display a character information input screen on which character information can be entered. This allows the worker to enter the start and end times of a work order along with an order number (character information) on the "character information input screen," so that the server 4 can manage the machining performance of each NC machine tool 1 without using the process management terminal 9. The machining performance management system for the NC machine tool 1 will be specifically described below.

The NC device 2 in the present embodiment is, for example, an NC device made by FANUC CORPORATION. In the present embodiment, an example will be described in which the "character information input screen" is a "maintenance information screen" displayed on an operation panel of the NC device made by FANUC CORPORATION.

### Schematic Configuration of Machining Performance Management System

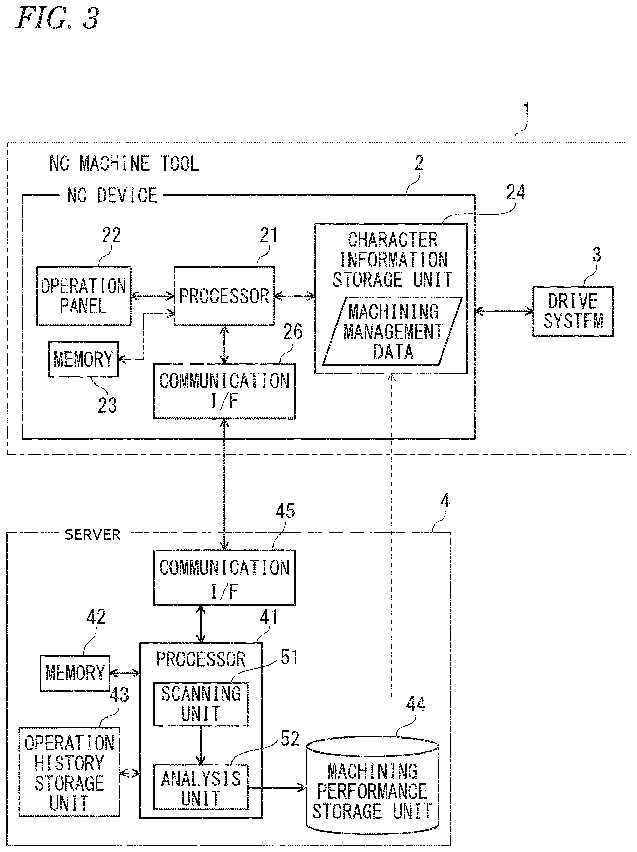

A schematic configuration of the machining performance management system will be described with reference to FIG. 3. FIG. 3 is a block diagram showing a schematic configuration of the machining performance management system and functional configurations of the NC device 2 and the server 4.

The machining performance management system according to the present embodiment includes the NC device 2 attached to the NC machine tool 1, and the server 4 connected to the NC device 2 via the network NW.

The NC device 2 includes a processor 21 that performs various arithmetic operations, the operation panel 22 that is operated by a user (worker), a memory 23 that stores various kinds of data and programs, a character information storage unit 24 that stores character information, and a communication interface 26 connected to the network NW. The processor 21 of the NC device 2 controls a drive system 3 of the machine tool body 10, and transmits predetermined information (including operation history data) to the server 4 via the communication interface 26.

The operation panel 22 includes the display unit that displays various kinds of information, and an input unit that receives input from the user. Information on a running program, workpiece position information, maintenance information, etc. are displayed on the display screen of the operation panel 22. The "maintenance information screen" that displays maintenance information usually only displays the specifications of each component device, and the worker on site generally does not use the maintenance information screen.

In the present embodiment, the worker enters "machining management data," which will be described later, on the maintenance information screen (character information input screen) on which character strings can be entered. The server 4 can thus automatically analyze the machining performance of each NC machine tool 1. The machining management data entered on the maintenance information screen is stored in the character information storage unit 24.

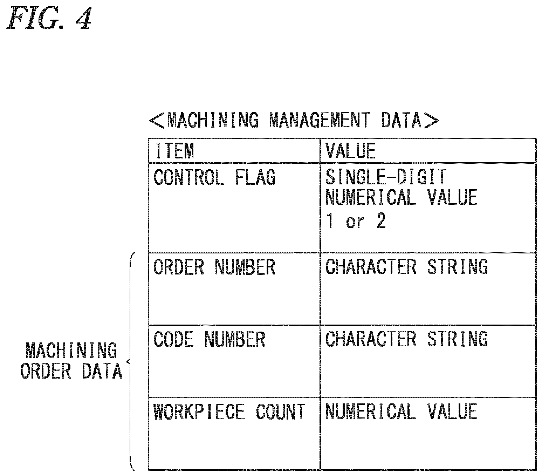

FIG. 4 is a table showing an example of the content of the machining management data. The machining management data includes at least an order number and a control flag. The order number is a number represented by a character string corresponding to a desired machining order. The control flag is a flag that is set and updated according to the machining status (start/end of machining) of a workpiece according to the machining order. In the present embodiment, the machining management data further includes a code number of a machined product identified by the order number, and the number of workpieces planned to be machined (workpiece count). In the following description, the machining management data other than the control flag (order number, code number, and number of workpieces planned to be machined) is referred to as "machining order data."

The order number is typically represented by a combination of numerals, letters, and symbols (character string). The code number is also typically represented by a combination of numerals, letters, and symbols (character string). The number of workpieces planned to be machined (workpiece count) is represented by a numeral.

For example, while checking a written work order, the worker enters machining order data (order number, code number, and workpiece count) described in the written work order on the maintenance information screen. The control flag is a variable (single-digit numerical value). For example, the control flag is set to "1" (first value) when the machining is started, and is updated to "2" (second value) when the machining is finished. The control flag represents the machining status of the workpiece, and is set to "1" only during the machining period of the workpiece. In the case where a plurality of pieces of machining management data is entered in advance, the control flags can all be set to "2" in advance, and can be individually updated to "1" when the machining is started.

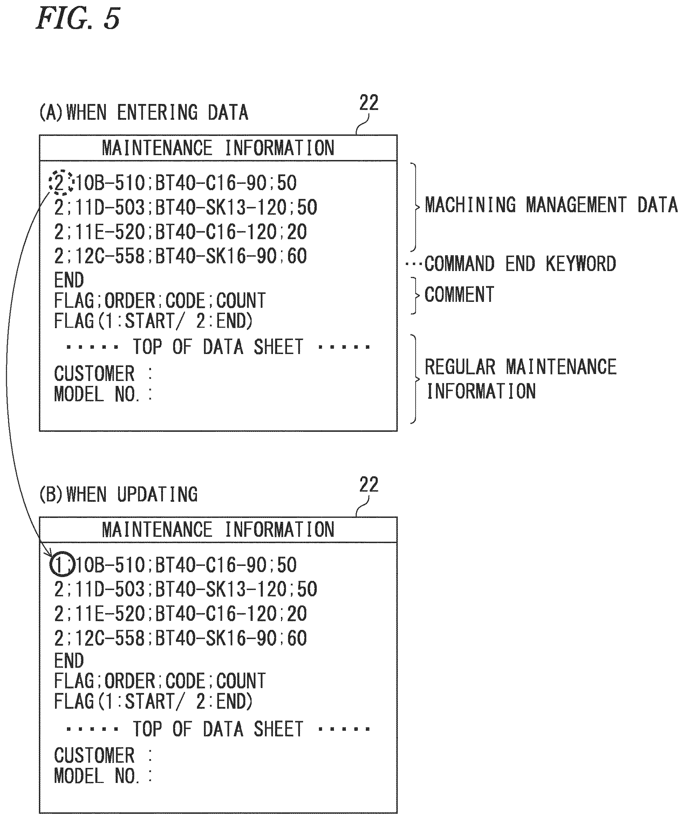

FIG. 5 shows specific examples of the maintenance information screen that is the character information input screen. In FIG. 5, (A) shows an example of the display screen when entering the machining management data, and (B) shows an example of the display screen when updating the control flag. As shown in (A) of FIG. 5, the machining management data is displayed above regular maintenance information, and is displayed at the top when the maintenance information screen is opened. The machining management data is entered one piece of data per line.

A predetermined keyword (hereinafter referred to as "command end keyword") is displayed in the line following the last line of the machining management data. As will be described later, a scanning unit 51 of the server 4 can determine the description range of the machining management data by the command end keyword. The command end keyword may be a letter string such as "END," or may be a predetermined numeral or symbol.

The order of describing a plurality of items of the machining management data is fixed. In the present embodiment, the items are described in the order of the control flag (numerical value of 1 or 2), the order number (character string such as "10B-510" or "11D-503"), the code number (character string such as "BT40-C16-90" or "BT40-SK13-120"), and the workpiece count (numerical value), from left to right. The items are separated by, for example, a semicolon (;). In order to reduce mistakes that are made by the worker when entering data, comment information indicating the order of describing the items may be displayed below the command end keyword. As shown in FIG. 5, the comment information includes a plurality of item names (character strings) displayed in the order of entry and a definition (character string) of each value that the control flag can take.

Referring back to FIG. 3, the server 4 includes a processor 41 that performs various arithmetic operations, a memory 42 that stores various kinds of data and programs, an operation history storage unit 43 that stores operation history data, and a machining performance storage unit 44 that stores machining performance data.

The server 4 includes, as its functional configurations, the scanning unit 51 and an analysis unit 52. The scanning unit 51 periodically scans the machining management data retained (stored) in the character information storage unit 24 of each NC device 2, and determines the start and end of machining of workpieces (according to a corresponding order number) from the value of the control flag. The analysis unit 52 analyzes the machining performance of the NC machine tool 1 in response to the determination of the end of the machining by the scanning unit 51. Specific processes that are performed by the scanning unit 51 and the analysis unit 52 will be described later.

The scanning unit 51 and the analysis unit 52 are implemented by the processor 41 executing a machining status monitoring program (including a scan program and an analysis program). The machining status monitoring program is an application program stored in the memory 42. The machining status monitoring program may be a program stored in the cloud.

The operation history storage unit 43 stores operation history data received from each NC device 2 connected via the network NW. The operation history data includes a program number (Oxxxx) that identifies a main machining program (NC program), and time-series code information provided by the main machining program. The operation history data further includes a program number (Oxxxx) that identifies a subprogram called from the main machining program, and time-series code information provided by the subprogram.

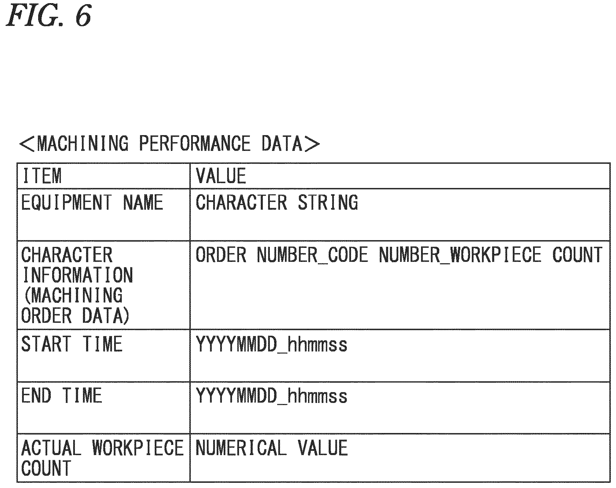

The machining performance storage unit 44 stores machining performance data obtained based on the analysis results of the analysis unit 52. FIG. 6 is a table showing an example of the content of the machining performance data stored in the machining performance storage unit 44. As shown in FIG. 6, the machining performance data includes an equipment name identifying each NC machine tool 1, character information (machining order data), a machining start time (date and time), a machining end time (date and time), and the number of workpieces actually machined (actual workpiece count). The character information stored in the machining performance storage unit 44 may be any character information as long as it includes at least an order number. A plurality of pieces of machining performance data is stored in the machining performance storage unit 44.

### Operation of Machining Performance Management System

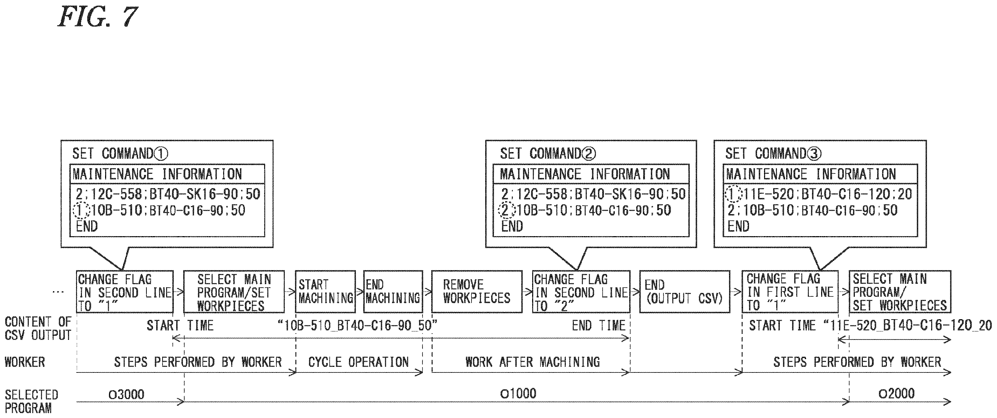

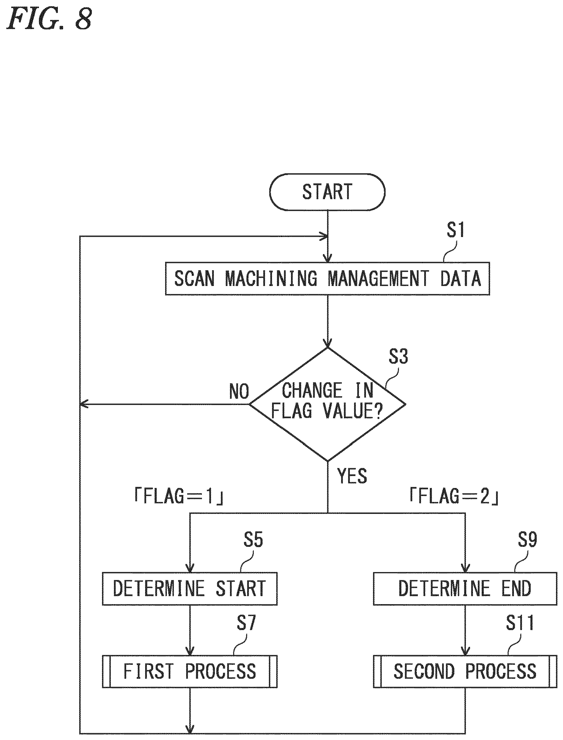

The operation of the machining performance management system will be described with reference to FIGS. 2, 7, and 8. FIG. 7 is a timing chart showing the overall operation flow of the machining performance management system according to the present embodiment. FIG. 8 is a flowchart showing a machining status monitoring process that is performed by the server 4. It is herein assumed that a plurality of pieces of machining management data each with the control flag set to "2" have been entered (stored in the character information storage unit 24) before the start of the machining status monitoring process.

Referring to FIGS. 2 and 8, the scanning unit 51 of the server 4 periodically (e.g., every five seconds) scans the machining management data (character information) stored in the character information storage unit 24 of the NC device 2 (step S1). The scanning unit 51 then detects, for each piece of machining management data, whether the value of the control flag has been changed (step S3).

For example, it is herein assumed that machining is to be started according to the order number in the second line displayed on the maintenance information screen of FIG. 7. In this case, the worker changes the control flag in the second line from "2" to "1" on the operation panel 22. It is desirable that this change of the control flag be made before the machining is actually started (before a main machining program is selected and workpieces are set).

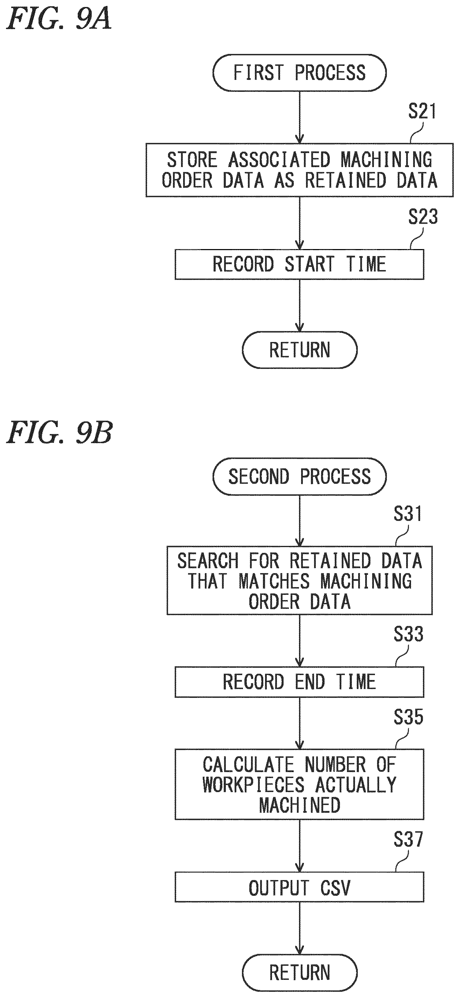

When the value of the control flag is changed from "2" to "1," the scanning unit 51 determines that machining of workpieces by the NC machine tool 1 has been started (step S5), and performs a first process (step S7). The first process is shown in FIG. 9A. The control flag may be set to "1" when the machining management data is entered. In this case, as soon as the control flag is set to "1," the scanning unit 51 determines that machining has been started.

As shown in FIG. 9A, the scanning unit 51 temporarily records machining order data (data including an order number) associated with the control flag of "1," along with the "equipment name" that can identify the target NC machine tool 1, in an internal memory etc. as retained data (step S21). The equipment name is represented by, for example, a character string. The scanning unit 51 also adds (records) the current time to the retained data as a machining start time (step S23). The order of steps S21, S23 may be reversed, and these steps may be performed simultaneously.

At this point, the retained data includes the equipment name, the machining order data, and the machining start time. That is, the order number and the machining start time are recorded in association with the name of the equipment that has started machining the workpieces. Since the scanning unit 51 is configured to scan a plurality of NC devices 2 connected via the network, the scanning unit 51 may hold a plurality of pieces of retained data at the same time.

This NC machine tool 1 continuously machines the number of workpieces according to the workpiece count to produce machined products identified by the order number (code number). When the continuous operation of the NC machine tool 1 stops and the machining is finished, the worker removes the workpieces and then changes the control flag in the second line from "1" to "2" on the operation panel 22.

When the value of the control flag is changed from "1" to "2," the scanning unit 51 determines that the machining of the workpieces by the NC machine tool 1 has been finished (step S9), and performs a second process (step S9). The second process is shown in FIG. 9B.

As shown in FIG. 9B, the scanning unit 51 searches for retained data that matches the machining order data associated with the control flag changed to "2" among the pieces of retained data retained in the scanning unit 51 (step S31). The scanning unit 51 then adds (records) the current time to this retained data as a machining end time (step S33). When the scanning unit 51 finishes recording the machining end time, the scanning unit 51 outputs the retained data including the name of the equipment that has machined the workpieces, the order number, the machining start time, and the machining end time to the analysis unit 52.

The analysis unit 52 calculates the number of workpieces actually machined, based on the retained data obtained from the scanning unit 51 (step S35). Specifically, the analysis unit 52 calculates the number of workpieces actually machined by referring to the operation history data associated with this order number in the operation history storage unit 43. The referred operation history data is the operation history data transmitted from the NC machine tool 1 (NC device 2) identified by the same equipment name as the equipment name of the NC machine tool 1 (NC device 2) that has transmitted the machining management data including this order number). Since the times when an M-code (M02 or M30) indicating the end of the main machining program (completion of machining of a workpiece) was executed can be known from the operation history data, the analysis unit 52 can calculate, as the number of workpieces actually machined according to this machining order, the number of times the main machining program was executed during the period from the machining start time to the machining end time recorded in the retained data. As described above, the analysis unit 52 analyzes, in response to determination of the end of the machining by the scanning unit 51, the machining performance according to the machining order based on both the operation history data associated with the order number and the machining management data (the retained data).

When the analysis unit 52 finishes calculating the number of workpieces actually machined, the analysis unit 52 outputs the retained data including the number of workpieces actually machined to the machining performance storage unit 44 as CSV (step S37). The retained data is thus stored in the machining performance storage unit 44 as machining performance data. As shown in FIG. 6, the machining performance data includes the name of the equipment that performed machining, the machining order data including the order number, the machining start time, the machining end time, and the number of workpieces actually machined (actual quantity).

A plurality of pieces of machining performance data is thus stored in the machining performance storage unit 44. This allows the server 4 to manage when and which NC machine tool 1 machined how many workpieces according to which machining order.

As described above, according to the present embodiment, the operation panel 22 of the NC device 2 includes the "character information input screen" on which the start and end times of a machining order can be entered along with an order number. This allows the server 4 to automatically collect information necessary to manage the machining performance from the NC device 2 and analyze the collected information (see FIG. 2). Therefore, in the machining performance management system according to the present embodiment, the server 4 can centrally manage the machining performance of each NC machine tool 1 without using the process management terminal 9 (FIG. 10).

The plurality of NC machine tools 1 installed in a factory include an NC lathe machine for turning a workpiece, a machining center for milling a workpiece, and an NC polishing machine for polishing a workpiece. This allows to manage the progress of the processes that are performed until one machined product is completed, based on a plurality of pieces of machining performance data stored in the machining performance storage unit 44.

The machining status monitoring method that is performed by the server 4 may be provided as an application program. Such a program may be provided as a program recorded on an optical medium such as a compact disc read-only memory (CD-ROM) or a computer-readable non-transitory recording medium such as a memory card. The program may be provided as a program that is downloadable via a network.

The program according to the present invention may be a program that causes a process to be executed by calling necessary program modules in a predetermined arrangement at a predetermined timing out of program modules provided as part of an operating system (OS) of a computer. In this case, the program itself does not include such modules, and the process is executed in cooperation with the OS. Such a program that does not include modules may also be included in the program according to the present invention.

The program according to the present invention may be provided as a program incorporated into part of another program. Even in this case, the program itself does not include modules included in this another program, and a process is executed in cooperation with this another program. Such a program incorporated into another program may also be included in the program according to the present invention.

The embodiment disclosed herein shall be construed as illustrative in all respects and not restrictive. The scope of the present invention is set forth by the claims rather than by the above description, and the present invention is intended to encompass all modifications that fall within the meaning and scope equivalent to the claims.

## Claims

1. A machining performance management system for an NC machine tool (1) that is configured to centrally manage machining performance of each NC machine tool (1), the machining performance management system comprising:
NC devices (2) each attached to a corresponding one of the NC machine tools (1) configured to perform a machining cycle of a workpiece according to a desired machining order; and
a server device (4) connected to the NC devices (2) via a network and configured to receive operation history data from the NC device (2), the operation history data being data including a program number and indicating an execution status of an NC program, wherein
the NC device (2) includes
a display unit (22) configured to display a character information input screen that allows character information to be entered, and
a character information storage unit (24) configured to store at least one piece of machining management data entered on the character information input screen, the machining management data including an order number and a control flag, the order number being information represented by a character string corresponding to the desired machining order, and the control flag being a flag that is set and updated based on a machining status of the workpiece according to the machining order,
the order number is identification information that uniquely identifies a machined product and a machining type, and
the server device (4) includes
a scanning unit (51) configured to periodically scan the machining management data that is character information retained in the character information storage unit of the NC device (2), and to determine, based on a value of the control flag, start and end of machining of the workpiece according to the machining order,
an analysis unit (52) configured to analyze, in response to determination of the end of the machining by the scanning unit (51), machining performance according to the machining order by referring to the operation history data associated with the order number, and
a machining performance storage unit (44) configured to store machining performance data, the machining performance data including an equipment name to identify each of the NC machine tools (1), the order number, a machining start time, a machining end time, and the number of workpieces actually machined.

2. The machining performance management system according to claim 1, wherein
variables to which the control flag is allowed to take include a first value indicating the start of machining and a second value indicating the end of machining, and
the scanning unit (51) is configured to record a time when the control flag is set to the first value as the machining start time, and records a time when the control flag is updated from the first value to the second value as the machining end time.

3. The machining performance management system according to claim 2, wherein
the analysis unit (52) is configured to calculate, as the number of workpieces actually machined according to the machining order, the number of times a main machining program was executed during a period from the machining start time to the machining end time recorded by the scanning unit (51).

4. The machining performance management system according to claim 1, wherein
the machining management data includes, in addition to the order number and the control flag, either or both of a code number of the machined product identified by the order number and the number of workpieces planned to be machined.

5. The machining performance management system according to any one of claims 1 to 4, wherein
the character information input screen is a maintenance information screen describing maintenance information of the NC machine tool (1).

6. A server device (4) connected via a network to an NC device (2) attached to an NC machine tool (1) configured to perform a machining cycle of a workpiece according to a desired machining order, the server device (4) comprising:
an operation history storage unit (43) configured to store operation history data received from the NC device (2), the operation history data being data including a program number and indicating an execution status of an NC program;
a scanning unit (51) configured to periodically scan at least one piece of machining management data retained as character information in the NC device (2), the machining management data including an order number and a control flag, the order number being identification information that is represented by a character string corresponding to the desired machining order and that uniquely identifies a machined product and a machining type, the control flag being a flag that is set and updated based on a machining status of the workpiece according to the machining order, and the scanning unit (51) being configured to determine, based on a value of the control flag, start and end of machining of the workpiece according to the machining order;
an analysis unit (52) configured to analyze, in response to determination of the end of the machining by the scanning unit (51), machining performance according to the machining order by referring to the operation history data associated with the order number as received from the NC device (2); and
a machining performance storage unit (44) configured to store machining performance data, the machining performance data including an equipment name to identify each of the NC machine tools (1), the order number, a machining start time, a machining end time, and the number of workpieces actually machined.

7. A machining status monitoring program configured to be executed by a server device (4) connected via a network to an NC device (2) attached to an NC machine tool (1) configured to execute a machining cycle of a workpiece according to a desired machining order, the machining status monitoring program comprising:
storing operation history data received from the NC device, the operation history data being data including a program number and indicating an execution status of an NC program;
periodically scanning (S1) at least one piece of machining management data retained as character information in the NC device (2), the machining management data including an order number and a control flag, the order number being identification information that is represented by a character string corresponding to the desired machining order and that uniquely identifies a machined product and a machining type, and the control flag being a flag that is set and updated based on a machining status of the workpiece according to the machining order;
when the control flag has a first value, determining (S5) start of machining of the workpiece according to the machining order;
when the control flag has a second value, determining end (S9) of the machining of the workpiece according to the machining order;
in response to determination of the end of the machining, analyzing (S11) machining performance according to the machining order by referring to the operation history data associated with the order number as received from the NC device; and
storing machining (S37) performance data, the machining performance data including an equipment name to identify each of the NC machine tools, the order number, a machining start time, a machining end time, and the number of workpieces actually machined.
